# EUROPEAN PATENT APPLICATION

(11) **EP 4 550 189 A1**
(43) Date of publication of application: **07.05.2025**
(21) Application number: 24210558.3
(22) Date of filing: 04.11.2024
(51) Int. Cl.: G06F 21/56, G06F 16/14, H04L 9/40

(54) **VIRUS DETECTION METHOD, APPARATUS, AND ELECTRONIC DEVICE, STORAGE MEDIUM**

(30) Priority: 06.11.2023 CN 202311461378
(71) Applicant: New H3C Network Information Security Software Co., Ltd., Hefei, Anhui 230001 (CN)
(72) Inventor: Hu, Longfei, Beijing, 100102 (CN)
(74) Representative: Grünecker Patent- und Rechtsanwälte PartG mbB

(57) **Abstract**

Method apparatus, storage medium, and electronic device for virus detection are provided. The method includes: computing a target hash digest of a file to be detected, and based on the hash functions of a preset Bloom filter and the target hash digest, computing the bit indices of the file to be detected in the preset Bloom filter; the bit indices of each known virus file in the preset Bloom filter are determined based on a hash digest of the corresponding known virus file, and all of parameter values corresponding to the bit indices of each known virus file in the preset Bloom filter are a preset value; determining whether the file to be detected is a virus file based on the preset Bloom filter and the corresponding bit index of the file to be detected.

## Description

### TECHNICAL FIELD

The present disclosure relates to the field of network security, particularly to virus detection.

### BACKGROUND

With the development of Internet technology, virus attacks have become a means of cybercrime, making it crucial to promptly handle transmitted files containing viruses. Currently, the primary approach involves computing a hash digest of each virus file in a virus database using a message digest algorithm and storing the hash digest in memory. When it is necessary to check whether a file contains a virus, a judgment can be made based on the hash digest of all virus files in the memory. However, the number of viruses in the virus database is in the hundreds of millions, which makes the generated hash digest set occupy a huge amount of memory resources.

### SUMMARY

Disclosed in embodiments of the present disclosure are method, apparatus, storage medium, and electronic device for virus detection. In order to gain a basic understanding of some aspects of the disclosed examples, a brief overview is provided below. This summary is neither a general commentary nor intended to identify key/essential components or delineate the scope of protection for these examples. The only purpose is to present some concepts in a simplified form as a preamble to the detailed description that follows.

According to a first aspect of the present disclosure, examples of the present disclosure provide a virus detection method, which comprises:
computing a target hash digest of a file to be detected;
computing bit indices of the file to be detected in a preset Bloom filter based on hash functions of the preset Bloom filter and the target hash digest; wherein bit indices of each known virus file in the preset Bloom filter are determined based on a hash digest of the corresponding known virus file; and all of parameter values corresponding to the bit indices of each known virus file in the preset Bloom filter are a preset value;
determining whether the file to be detected is a virus file based on the preset Bloom filter and the bit indices corresponding to the file to be detected.

In the second aspect, an example of the present disclosure provides a virus detection apparatus, which comprises:
a first computation module for computing a target hash digest of a file to be detected;
a second computation module for computing bit indices of the file to be detected in a preset Bloom filter based on hash functions of the preset Bloom filter and the target hash digest; wherein, bit indices of each known virus file in the preset Bloom filter are determined according to a hash digest of the corresponding known virus files, and all of parameter values corresponding to the bit indices of each known virus file in the preset Bloom filter a preset value;
a determination module for determining whether the file to be detected is a virus file based on the preset Bloom filter and the bit indices corresponding to the file to be detected.

In the third aspect, the examples of the present disclosure provide a computer storage medium storing a plurality of instructions, which are suitable for being loaded and executed by a processor, causing the processor to perform the above-mentioned method processing.

In the fourth aspect, the examples of the present disclosure provide an electronic device, which may include: a processor and a memory; wherein the memory stores computer programs suitable for being loaded and executed by the processor, causing the processor to perform the above-mentioned method processing.

The technical solution provided in the examples of the present disclosure can include the following beneficial effects.

In the examples of the present disclosure, the preset Bloom Filter stores the parameter values corresponding to the bit indices of the hash digests of known virus files. These parameter values occupy small memory resources while being able to represent information about all known virus files. Therefore, by computing the hash digest of the file to be detected and combining it with the preset Bloom Filter, it can accurately determine whether the file to be detected is a non-virus file, thereby improving the accuracy of virus file identification.

It should be understood that the above general description and subsequent detailed descriptions are merely illustrative and explanatory and do not limit the present disclosure.

### BRIEF DESCRIPTION OF DRAWINGS

The accompanying figures herein are incorporated into the specification and constitute a part of this specification, illustrating examples that comply with the present disclosure and serving together with the specification to explain the principles of the present disclosure.
FIG. 1 is a flow diagram illustrating a virus detection method provided in one or more examples of the present disclosure;
FIG. 2 is a schematic diagram illustrating a configuration of a Bloom Filter based on known virus files provided in the present disclosure;
FIG. 3 is a schematic diagram illustrating the determination of a file to be detected based on the Bloom Filter provided in the present disclosure;
FIG. 4 is a block diagram illustrating the process of updating the active time provided in one or more examples of the present disclosure;
FIG. 5 is a block diagram illustrating the process of storing data in preset blacklists and preset whitelists provided in one or more examples of the present disclosure;
FIG. 6 is a block diagram illustrating the process of virus detection provided in one or more examples of the present disclosure;
FIG. 7 is a structural diagram illustrating a virus detection apparatus provided in one or more examples of the present disclosure;
FIG. 8 is a structural diagram illustrating an electronic device provided in one or more examples of the present disclosure.

### DETAILED DESCRIPTION

The following descriptions and drawings sufficiently demonstrate the specific examples of the present disclosure, enabling skilled in the field to practice them.

It should be clarified that the described examples are merely a part of the examples of the present disclosure, not all examples. Based on the examples in the present disclosure, all other examples obtained by ordinary technicians in the field without creative work belong to the scope of protection of the present disclosure.

When the following descriptions refer to the drawings, unless otherwise indicated, the same numbers in different drawings represent the same or similar elements. The implementations described in the following exemplary examples do not represent all implementations consistent with the present disclosure. Instead, they are merely examples of apparatuses and methods consistent with some aspects of the present disclosure, as detailed in the accompanying claims.

In the description of the present disclosure, it is necessary to understand that terms such as "first," "second," etc., are used solely for descriptive purposes and cannot be construed as indicating or implying relative importance. For ordinary technicians in the field, the specific meanings of these terms in the present disclosure can be understood according to specific situations. In addition, in the description of the present disclosure, unless otherwise specified, "plurality" refers to two or more. "And/or" describes the association relationship between related objects, indicating that three relationships can exist, for example, A and/or B, which can represent: A exists alone, both A and B exist simultaneously, or B exists alone. The character "/" generally indicates that the objects before and after it are in an "or" relationship.

Currently, to address the issue of hash digest sets occupying large amounts of device memory resources, a set of highly active virus files are selected from the virus database based on their activity levels to construct a target hash digest set for use in actual virus detection.

The inventor of the present disclosure notes that since the target hash digest set does not include virus files with low activity levels, when a file requiring detection is a low-activity virus file, it may not be processed in a timely manner, thereby reducing the accuracy of virus file identification.

In order to address the issue of low accuracy in virus file identification, the inventor of the present disclosure has discovered that by using a hash function based on a preset Bloom filter, bit indices of a file to be detected in the preset Bloom filter are computed; parameter values corresponding to the bit indices of known virus files in the preset Bloom filter are all 1; it is confirmed whether the file to be detected is a virus file based on the preset Bloom filter and the bit indices corresponding to the file to be detected. As the preset Bloom filter provided in this disclosure stores the parameter values corresponding to the bit indices of hash digests of known virus files, these parameter values occupy minimal memory resources while representing information for all known virus files. Therefore, by computing the hash digest of the file to be detected and combining it with the preset Bloom filter, it can accurately determine whether the file to be detected is a non-viral file, thereby improving the accuracy of virus file identification.

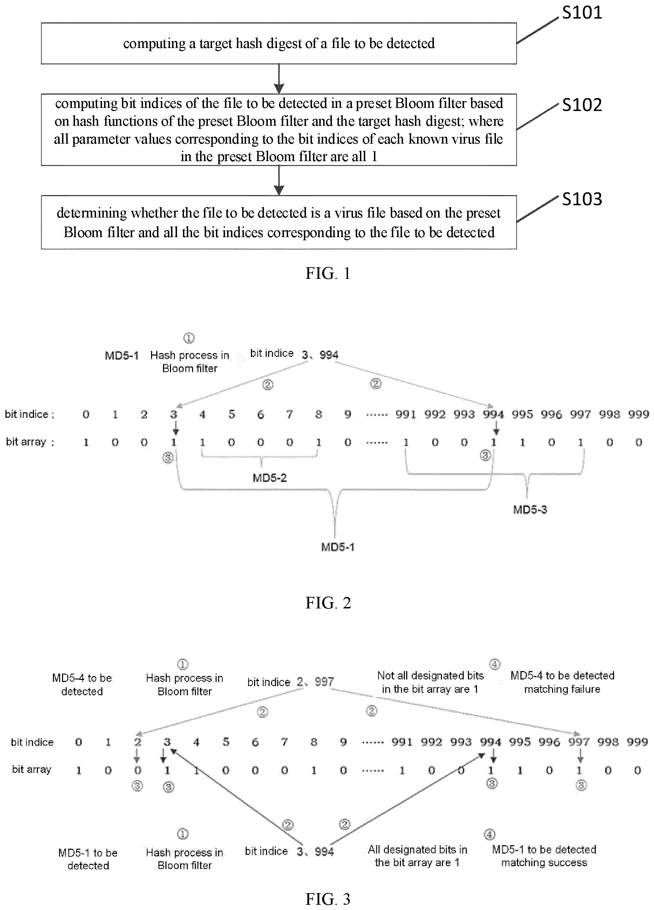

The present disclosure provides a virus detection method, apparatus, storage medium, and electronic device to address the issues existing in the related technical problems mentioned above. The following will provide a detailed introduction to the virus detection method provided in the examples of the present disclosure in conjunction with FIGS. 1 to 6. This method can be implemented through computer programs and can run on virus detection apparatus based on the von Neumann architecture. The computer programs can be integrated into an application or run as an independent tool-type application.

Please refer to FIG. 1, which is a schematic flow diagram illustrating a virus detection method provided in one or more examples of the present disclosure. As shown in FIG. 1, the method of the example of the present disclosure may include the following steps.

In S101, a target hash digest of a file to be detected is computed;

where the file to be detected is a file that requires virus detection. This file can be a file intercepted by a firewall in online traffic, a file from a third-party device such as a USB flash drive, or a file from other sources.

In the related art, a hash digest and a hash value essentially refers to the same concept which commonly describes an output of a hash function. However, in examples of the present disclosure, the hash digest and the hash value are utilized differently. Specifically, the hash digest is related to a file to be detected, and computed by a first hash function; the hash digest is subject to a process of a Bloom filter to obtain the hash value, where hash functions in the Bloom filter are referred to a second hash function.

In one example of the present disclosure, the target hash digest of the file to be detected is computed based on a MD5 message-digest algorithm, specifically utilizing a preset hash function of the MD5 message-digest algorithm.

In S102, based on hash functions of the preset Bloom filter and the target hash digest, bit indices of the file to be detected in the preset Bloom filter are computed; where the bit indices of each known virus file in the preset Bloom filter are determined based on the hash digest of the corresponding known virus file; all parameter values corresponding to the bit indices of each known virus file in the preset Bloom filter are preset values;
where a Bloom Filter is a highly space-efficient data structure used to test whether an element is not a member of a set. The Bloom Filter inherently possesses multiple hash functions that can compute hash values for any element, enabling the identification of bit indices in the Bloom Filter that match the computed hash values. The preset values are 1.

Specifically, there are two basic operations of a Bloom Filter: adding an element and querying an element.

Adding an element: an element is mapped through hash functions to obtain certain positions in a bit array, and then the values at these positions are set to 1.

Querying an element: an element is mapped through hash functions to obtain certain positions in a bit array, and then the values at these positions are checked. If all the values at these positions are 1, then it is considered that the element may be in the set; if any of the values at these positions is 0, then it is considered that the element is definitely not in the set.

In one example of the present disclosure, when performing the element adding operation on the Bloom filter based on each known virus file, the hash digests of each known virus file are computed according to the preset hash function; based on all the hash functions of the preset Bloom filter, the hash values of hash digests of each known virus file are computed separately; the hash values corresponding to each known virus file are determined as all the bit indices corresponding to each known virus file in the preset Bloom filter; the parameter values corresponding to all the bit indices of each known virus file in the preset Bloom filter are set to a preset value. In this disclosure, since all the parameter values corresponding to the bit indices of each known virus file are set in the Bloom filter, it can solve the issues of high memory consumption and low accuracy of virus detection. Each of the known virus files in the present disclosure can be updated at any time, including but not limited to adding and deleting known virus files.

For example, as shown in FIG. 2, assuming the number of known virus files is n=100, the size of the Bloom Filter's bit array is m=1000, and the number of Hash functions in the Bloom Filter is k=2. A simplified example of the configuration process of the bit array is as follows:
taking a hash value MD5-1 corresponding to the hash digest of a known virus file, after mapping through the above 2 Hash functions, computing and obtaining two bit array indices less than 1000, which are assumed to be 3 and 994, as shown in the process ① of FIG. 2; finding the same bit indices corresponding to 3 and 994 in the Bloom Filter's bit array, as shown in the process ② of Figure 2; setting the parameter values corresponding to the same bit indices of 3 and 994 to 1, as shown in the process ③ of FIG. 2. The conversion and storage of the MD5 value of one known virus file is completed. Then, the process proceeds to set the bits for all remaining known virus files following the same method, and finally, the configuration of the bit array in the entire Bloom Filter can be completed.

In an example of the present disclosure, during performing the element query operation, when computing all the bit indices of the file to be detected in the preset Bloom Filter based on all the hash functions of the preset Bloom Filter and the target hash digest, the hash values of the target hash digest are computed separately according to all the hash functions of the preset Bloom Filter; the computed hash values are determined as the corresponding bit indices of the file to be detected in the preset Bloom Filter. By computing the corresponding bit indices of the file to be detected in the preset Bloom Filter, the present disclosure facilitates querying parameter values corresponding to the file within the preset Bloom Filter.

In some examples, after computing the hash digest of each known virus file, a single hash digest consists of 32 characters. For a billion virus samples, it would require a minimum of 32GByte of device resources, occupying a significant amount of device memory. Therefore, in the present disclosure, the computed hash digest of each known virus file can be stored in an external storage device, thereby avoiding occupying a large amount of device memory resources. External storage devices include hard drives, disks, and other storage medium.

In S103, whether the file to be detected is a virus file is determined based on the preset Bloom Filter and the corresponding bit indices of the file to be detected.

In an example of the present disclosure, during the execution of the element query process, when determining whether the file to be detected is a virus file based on the preset Bloom Filter and all the corresponding bit indices of the file to be detected, the target parameter values of all the bit indices corresponding to the file to be detected are queried within the preset Bloom Filter; if all the target parameter values of the bit indices are the preset value, the file to be detected is subjected to virus detection based on at least one of a preset whitelist, preset blacklist, and the external storage device to identify whether the file to be detected is a virus file; wherein, the preset whitelist stores multiple hash digests of non-virus files, the preset blacklist stores multiple hash digests of virus files, and the external storage device stores the hash digest of each known virus file; or, if there is a parameter value among the target parameter values of all the bit indices that is not the preset value, it is determined that the file to be detected is not a virus file. Through the example of the present disclosure, it is possible to accurately determine the files to be detected that are definitely not virus files.

As shown in FIG. 3, assuming that the hash digests of two files to be detected are computed as MD5-1 and MD5-4, a simplified example of the matching process is as follows.

MD5-4 can be processed by all the hash functions of the preset Bloom Filter to obtain hash values 2 and 997, as shown in the process ① of FIG. 3; the same bit indices as hash values 2 and 997 are found in the bit indices of the preset Bloom Filter, as shown in the process ② of FIG. 3; whether all parameter values corresponding to these two bit indices are 1 is checked, as shown in the process (3) of FIG. 3; since not all parameter values are 1, a matching failure result is output, as shown in the process ④ of FIG.3; therefore, the file to be detected corresponding to MD5-4 is not a virus file.

MD5-1 can be processed by all the hash functions of the preset Bloom Filter to obtain hash values 3 and 994, as shown in the process ① of FIG. 3; the same bit indices as hash values 3 and 994 are found in the bit indices of the preset Bloom Filter, as shown in the process ② of FIG. 3; whether all parameter values corresponding to these two bit indices are 1 are checked, as shown in the process ③ of FIG. 3; since all parameter values are 1, a matching success result is output, as shown in the process ④ of FIG. 3; therefore, the file to be detected corresponding to MD5-1 is a virus file.

In some examples, while the Bloom Filter can accurately identify files that are definitely not virus files, there may still be a false positive rate for detected virus files, necessitating a secondary verification of the results. For instance, considering a scenario with the number of virus samples "n" = 1 billion, the same memory resources as MD5, the bit array size "m" would be 32GByte = 256Gbit = 256 billion bits, when the number "k" of hash functions for the Bloom Filter is set to 6, the false positive rate is approximately 0.000000000154323239159408726016, which translates to approximately 1.54 false positives out of one billion Bloom Filter matches.

In an example of the present disclosure, to address the potential false positive rate of the preset Bloom Filter, the disclosure can perform virus detection on the file to be detected as a virus file based on at least one of the preset whitelist, preset blacklist, and external storage devices.

In one example, virus detection on the file to be detected as a virus file can be conducted based on both the preset whitelist and the preset blacklist; if the target hash digest of the file to be detected exists in the preset whitelist, the file is determined not to be a virus file; or, if the target hash digest of the file to be detected does not exist in the preset whitelist but exists in the preset blacklist, the file is determined to be a virus file.

In another example, virus detection on the file to be detected can be conducted based on the preset whitelist, preset blacklist, and external storage devices; if the target hash digest of the file to be detected does not exist in either the preset whitelist or the preset blacklist, but exists in the hash digests of known virus files stored in the external storage device, the file to be detected is determined to be a virus file; the target hash digest of the file to be detected is stored in the preset blacklist; or, if the target hash digest of the file to be detected does not exist in either the preset whitelist or the preset blacklist, and also does not exist in the hash digest of known virus files stored in the external storage device, the file to be detected is determined not to be a virus file; the target hash digest of the file to be detected is stored in the preset whitelist.

In yet another example, virus detection can be solely based on the preset whitelist. If the target hash digest of the file to be detected exists in the preset whitelist, the file is determined not to be a virus file.

In another example, virus detection can also be solely based on the preset blacklist. If the target hash digest of the file to be detected exists in the preset blacklist, the file is determined to be a virus file.

It should be noted that utilizing the preset whitelist can address the false positive issue of the Bloom Filter, while utilizing the preset blacklist can reduce the need for secondary detection operations on virus files.

In one or more examples of the present disclosure, virus files tend to be more active within a short period of time, leading to a higher probability of reoccurrence. Conversely, the longer the interval, the lower the activity and the lower the probability of reoccurrence. Therefore, when the data amount of the preset whitelist or preset blacklist reaches its upper limit, based on the detected occurrence time of virus, the virus list with the oldest occurrence time can be deleted to accommodate virus lists with higher activity levels. This ensures that, within a certain amount limit, there exist relatively more active virus blacklists and whitelists. This approach addresses the false positive issue of the Bloom Filter and reduces the need for secondary verification operations through external storage devices.

When the target hash digest of the file to be detected exists in the preset whitelist or blacklist, the historical storage time of the existing hash digest that is identical to the target hash digest of the file to be detected is retrieved and updated to the current time.

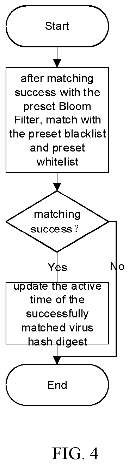

As shown in FIG. 4, which is a schematic block diagram illustrating the active time update process, after successfully matching with the preset Bloom Filter, the process proceeds to match with the preset blacklist and whitelist; if a successful match is found with either the blacklist or whitelist, the active time of the successfully matched virus hash digest is updated; or, if no match is found with either the blacklist or whitelist, the process ends.

In a case where the target hash digest of the file to be detected is to store in the preset blacklist, if the data amount in the preset blacklist reaches the preset limit, the hash digest with the earliest storage time in the preset blacklist is retrieved, deleted, and the target hash digest of the file to be detected is saved to the preset blacklist; or, if the data amount in the preset blacklist has not reached the preset limit, the target hash digest of the file to be detected is directly saved to the preset blacklist; the storage time of the target hash digest is set to the current moment.

In a case where the target hash digest of the file to be detected is to store in the preset whitelist, if the data amount in the preset whitelist reaches the preset limit, the hash digest with the earliest storage time in the preset whitelist is retrieved, deleted, and the target hash of the file to be detected is saved to the preset whitelist; or, if the data amount in the preset whitelist has not reached the preset limit, the target hash digest of the file to be detected is directly saved to the preset whitelist; the storage time of the target hash digest is set to the current moment.

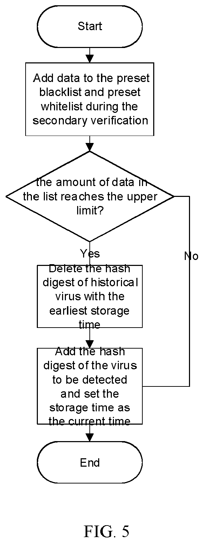

As shown in FIG. 5, which is a schematic block diagram illustrating the process for storing data in the preset blacklist and whitelist. The process of adding data to the preset blacklist and whitelist is triggered during the secondary verification. It judges whether the amount of data in the list reaches the upper limit: if yes, the hash digest of historical virus file with the earliest storage time is deleted, and the hash digest of the virus to be detected is added and the current time is set as the storage time; if not, the hash digest of the virus file to be detected is added and the current time is set as the storage time.

By updating the historical storage time, virus hash digest with low activity levels can be deleted, reducing both secondary detection operations for virus files and false positives for non-virus files, while also preventing excessive data from consuming significant device memory.

In some examples, if the file to be detected is determined not to be a virus file, it may be allowed to be transmitted to the target device; or, if the file to be detected is determined to be a virus file, its transmission to the target device may be prohibited, and a blocking and alerting action may be executed.

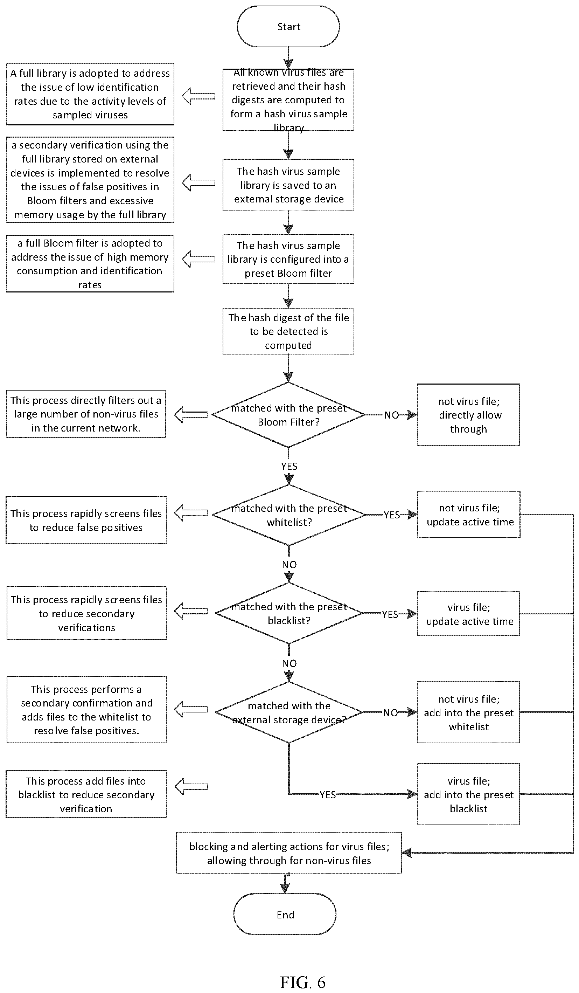

As shown in FIG. 6, it shows a schematic block diagram of a virus detection process provided in this disclosure. All known virus files are retrieved and their hash digests are computed to form a hash digest virus sample library. A full library approach is adopted to address the issue of low identification rates due to the activity levels of sampled viruses. The hash digest virus sample library is saved to an external storage device, and a secondary verification using the full library stored on the external storage device is implemented to solve the issues of false positives in Bloom filters and excessive memory usage by the full library. The hash digest virus sample library is configured into a preset Bloom filter, leveraging a full Bloom filter to tackle issues related to high memory consumption and identification rates. The hash digest of the file to be detected is computed and matched against the preset Bloom filter. This process may directly filter out a large number of non-virus files in the current network. If a match is successful, the file to be detected is determined to be non-virus and can be directly allowed through. If the match fails, the hash digest of the file to be detected is matched against the preset whitelist. This process rapidly screens files to reduce false positives. If a match is successful, the file to be detected is determined as non-virus and its activity time in the preset whitelist is updated. The hash digest of the file to be detected is matched against the preset blacklist. This process rapidly screens files to reduce secondary verifications. If a match is successful, the file to be detected is determined as a virus file and its activity time in the preset blacklist is updated. If the match fails, the hash digest is matched against the sample library on the external storage device. This process performs a secondary confirmation and adds files to the whitelist to solve false positives. If the match fails, the file to be detected is determined to be non-virus and added to the preset whitelist. If the match is successful, the file to be detected is determined as a virus file and added to the preset blacklist. Blocking and alerting actions are executed for virus files, while non-virus files are allowed through.

In the examples of this application, the preset Bloom filter provided herein stores parameter values corresponding to the bit indices of hash digest of known virus files. These parameter values occupy minimal memory resources while representing information on all known virus files. Therefore, by computing the hash digest of the file to be detected and combining it with the preset Bloom filter, an accurate determination can be made on whether the file to be detected is non-virus, thereby enhancing the accuracy of virus file identification.

The following is an example of the apparatus of the present disclosure, which can be used to execute the method examples of the present disclosure. For details not disclosed in the apparatus examples of the present disclosure, please refer to the method examples of the present disclosure.

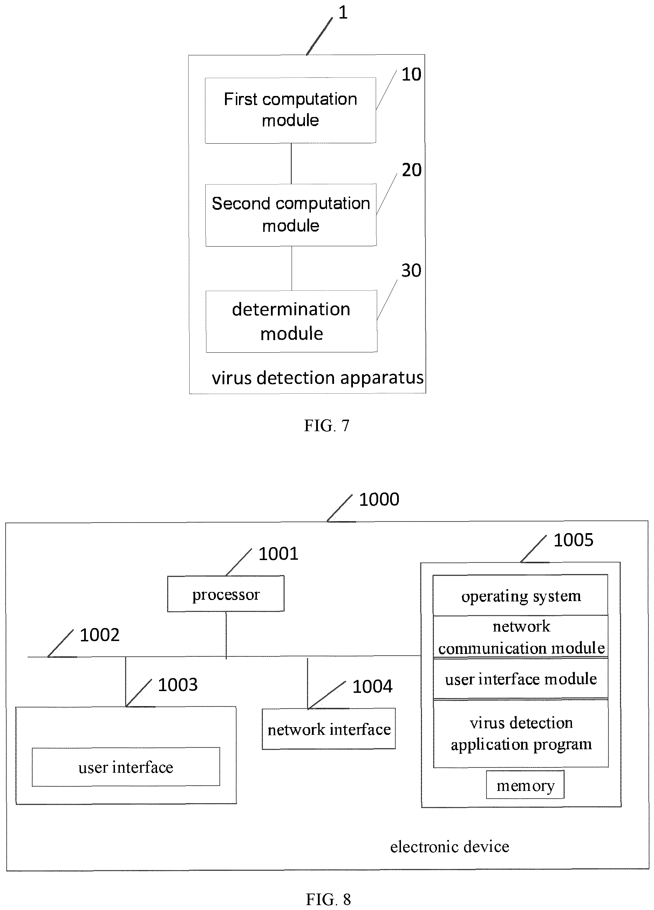

Please refer to FIG. 7, which shows a structural diagram of a virus detection apparatus 1 provided in an exemplary example of the present disclosure. The virus detection apparatus can be implemented as all or a part of an electronic device through software, hardware, or a combination of both. The apparatus 1 includes a first computation module 10, a second computation module 20, and a determination module 30.

The first computation module 10 is configured for computing a target hash digest of a file to be detected.

The second computation module 20 is configured for computing bit indices of the file to be detected in a preset Bloom filter based on hash functions of the preset Bloom filter, wherein all of parameter values corresponding to the bit indices of known virus files in the preset Bloom filter are 1.

The determination module 30 is configured for determining whether the file to be detected is a virus file based on the preset Bloom filter and the bit indices corresponding to the file to be detected.

In some examples, the second computation module includes:
a hash value computation unit, which is configured for computing hash values of the target hash digest respectively according to the hash functions of the preset Bloom filter.
a bit index determination unit, which is configured for determining the computed hash values as corresponding bit indices of the file to be detected in the preset Bloom filter.

In some examples, the determination module includes:
a parameter value query unit, which is used for querying target parameter values of the bit indices corresponding to the file to be detected in the preset Bloom filter.
a virus file determination unit, which is configured for determining that the file to be detected is not a virus file in the case where there is a parameter value in the target parameter values of the bit indices that is not a preset value; in the case where all the target parameter values of the bit indices are the preset value, virus detection is performed on the file to be detected based on at least one of a preset whitelist, a preset blacklist, and an external storage device to identify whether the file to be detected is a virus file; where the preset whitelist stores hash digests of a plurality of non-virus files, the preset blacklist stores hash digests of a plurality of virus files, and the external storage device stores hash digests of each known virus file.

In some examples, the apparatus further includes:
a hash digest computation module, which is configured for computing a hash digest of each known virus file according to a preset hash function.
a hash value computation module, which is configured for computing the hash values of the hash digest of each known virus file respectively according to the hash functions of the preset Bloom filter.
a bit index determination module, which is configured for determining the hash values corresponding to each known virus file as corresponding bit indices of the corresponding known virus file in the preset Bloom filter.
a parameter value setting module, which is configured for setting parameter values corresponding to the bit indices of the respective known virus files in the preset Bloom filter to the preset value.

It should be noted that when the virus detection apparatus provided in the above examples executes the virus detection method, the division of the various functional modules is used merely as an example. In practical applications, the above functions can be allocated to different functional modules as needed, i.e., the internal structure of the apparatus can be divided into different functional modules to complete all or part of the functions described above. In addition, the virus detection apparatus provided in the above examples and the virus detection method examples belong to the same concept, and the implementation process is detailed in the method examples, so it will not be repeated here.

The serial numbers of the examples of the present disclosure are for description only and do not represent the merits or demerits of the examples.

In the examples of the present disclosure, the preset Bloom filter provided in the present disclosure stores the parameter values corresponding to the bit indices of the hash digests of known virus files. The parameter values corresponding to the bit indices of the hash digests of known virus files occupy a small amount of memory resources while being able to represent information of all known virus files. Therefore, by computing the hash digest of the file to be detected, it can be accurately determined whether the file to be detected is a non-virus file in combination with the preset Bloom filter, thereby improving the accuracy of virus file identification.

The present disclosure further provides a machine-readable medium having stored thereon program instructions, which, when executed by a processor, causes the processor to implement the virus detection method provided by each method example described above.

The present disclosure also provides a computer program product containing instructions that, when executed on a computer, cause the computer to perform the virus detection method of each method example described above.

Please refer to FIG. 8, which is a structural diagram of an electronic device according to an example of the present disclosure. The electronic device may be, but is not limited to, a network security device such as a firewall. As shown in FIG. 8, the electronic device 1000 may include: at least one processor 1001, at least one network interface 1004, a user interface 1003, a memory 1005, and at least one communication bus 1002.

The communication bus 1002 is used to realize connection communications between these components.

The user interface 1003 may include a display component. In some examples, the user interface 1003 may also include a standard wired interface and a wireless interface.

The network interface 1004 may optionally include a standard wired interface and a wireless interface (such as a WI-FI interface).

The processor 1001 may include one or more processing cores. The processor 1001 connects various parts within the entire electronic device 1000 using various interfaces and lines, and performs various functions and processes data of the electronic device 1000 by running or executing instructions, programs, code sets, or instruction sets stored in the memory 1005, as well as calling data stored in the memory 1005. In some examples, the processor 1001 may be implemented in at least one hardware form of Digital Signal Processing (DSP), Field-Programmable Gate Array (FPGA), or Programmable Logic Array (PLA). The processor 1001 may integrate a combination of one or more of the following: a Central Processing Unit (CPU), a Graphics Processing Unit (GPU), and a modem. Among them, the CPU mainly handles the operating system, user interface, and application programs, etc.; the GPU is responsible for rendering and drawing the content to be displayed on the display screen; and the modem is used to process wireless communications. It is understood that the modem may also not be integrated into the processor 1001 and may be implemented separately through a chip.

The memory 1005 may include a Random Access Memory (RAM) and may also include a Read-Only Memory (ROM). In some examples, the memory 1005 includes a non-transitory computer-readable storage medium. The memory 1005 is used to store instructions, programs, codes, code sets, or instruction sets. The memory 1005 may include a program storage area and a data storage area, where the program storage area may store instructions for implementing the operating system, instructions for at least one function (such as touch function, sound playback function, image playback function, etc.), and instructions for implementing each above-mentioned method example; the data storage area may store data involved in each above-mentioned method example. In some examples, the memory 1005 may also be at least one storage system located far away from the aforementioned processor 1001. As shown in FIG. 8, the memory 1005, as a computer storage medium, may include an operating system, a network communication module, a user interface module, and a virus detection application program.

In the electronic device 1000 illustrated in FIG. 8, the user interface 1003 is primarily used to provide an interface for user input and to acquire data input by the user. The processor 1001 is used to invoke the virus detection application stored in the memory 1005 and specifically execute the following operations:
computing the target hash digest of the file to be detected;
based on hash functions of the preset Bloom filter and the target hash digest, computing bit indices of the file to be detected in the preset Bloom filter; where the bit indices of each known virus file in the preset Bloom filter are determined based on a hash digest of the corresponding known virus file; all of parameter values corresponding to the bit indices of each known virus file in the preset Bloom filter are a preset value;
determining whether the file to be detected is a virus file based on the preset Bloom filter and the bit indices corresponding to the file to be detected.

In one example, when the processor 1001 performs the operation of computing the bit indices of the file to be detected in the preset Bloom filter based on the hash functions of the preset Bloom filter and the target hash digest, it specifically executes the following operations:
computing hash values of the target hash digest respectively based on hash functions of the preset Bloom filter;
determining the computed hash values as corresponding bit indices of the file to be detected in the preset Bloom filter.

In one example, when the processor 1001 performs the operation of determining whether the file to be detected is a virus file based on the preset Bloom filter and the bit indices corresponding to the file to be detected, it specifically executes the following operations:
querying target parameter values of the bit indices corresponding to the file to be detected in the preset Bloom filter;
in a case where there exists a parameter value among the target parameter values of the bit indices that is not a preset value, determining that the file to be detected is not a virus file;
in a case where all the target parameter values of the bit indices are the preset value, performing virus detection on the file to be detected based on at least one of a preset whitelist, a preset blacklist, and an external storage device to identify whether the file to be detected is a virus file;
where the preset whitelist stores hash digests of a plurality of files that are not virus files, the preset blacklist stores hash digests of a plurality of files that are virus files, and the external storage device stores the hash digests of each known virus file.

In one example, when the processor 1001 performs virus detection on the file to be detected based on the preset whitelist and preset blacklist, it specifically executes the following operations:
in a case where the target hash digest of the file to be detected exists in the preset whitelist, determining that the file to be detected is not a virus file; or,
in a case where the target hash digest of the file to be detected does not exist in the preset whitelist but exists in the preset blacklist, determining that the file to be detected is a virus file.

In one example, when the processor 1001 performs virus detection on the file to be detected based on the preset whitelist, preset blacklist, and external storage device, it specifically executes the following operations:
in a case where the target hash digest of the file to be detected does not exist in both the preset whitelist and the preset blacklist, but the target hash digest of the file to be detected exists in the hash digests of known virus files stored in the external storage device, determining that the file to be detected is a virus file; storing the target hash digest of the file to be detected in the preset blacklist;
in a case where the target hash digest of the file to be detected does not exist in both the preset whitelist and the preset blacklist, and the target hash digest of the file to be detected does not exist in the hash digests of known virus files stored in the external storage device, determining that the file to be detected is not a virus file; storing the target hash digest of the file to be detected in the preset whitelist.

In one example, the processor 1001 further executes the following operations:
when the target hash digest of the file to be detected exists in the preset whitelist or the preset blacklist, obtaining a historical storage time of an existing hash digest that is identical to the target hash digest of the file to be detected;
updating the historical storage time to a current time.

In one example, when the processor 1001 executes the operation of storing the target hash digest of the file to be detected in the preset blacklist, it specifically executes the following operations:
in a case where an amount of data in the preset blacklist reaches a preset amount, obtaining a hash digest with an earliest storage time from the preset blacklist; deleting the hash digest with the earliest storage time; storing the target hash digest of the file to be detected to the preset blacklist; or in a case where the amount of data in the preset blacklist does not reach the preset amount, directly storing the target hash digest of the file to be detected to the preset blacklist;
setting a storage time of the target hash digest to a current time.

In one example, the processor 1001 further executes the following operations:
computing a hash digest of each known virus file based on a preset hash function;
computing hash values of the hash digest of each known virus file respectively according to the hash functions of the preset Bloom filter;
determining the computed hash values corresponding to each known virus file as the corresponding bit indices of the corresponding known virus file in the preset Bloom filter;
setting the parameter values corresponding to the bit indices of the respective known virus files in the preset Bloom filter to a preset value.

In the examples of the present disclosure, the preset Bloom filter provided in the present disclosure stores the parameter values corresponding to the bit indices of the hash digests of known virus files. The parameter values corresponding to the bit indices of the hash digests of known virus files occupy small memory resources while being able to represent information of all known virus files. Therefore, by computing the hash digest of the file to be detected, it may accurately determines whether the file to be detected is a non-virus file in combination with the preset Bloom filter, thereby improving the accuracy of virus file identification.

Those skilled in the art can understand that all or a part of the processes in the above-mentioned example methods can be completed by instructing relevant hardware through computer programs. The virus detection program can be stored in a computer-readable storage medium. When the program is executed, it may include the processes of the examples of the above-mentioned methods. The storage medium can be a magnetic disk, an optical disk, a read-only memory (ROM), a random access memory (RAM), or the like.

The above disclosure is merely the preferred examples of the present disclosure and should not be used to limit the scope of the present disclosure. Therefore, equivalent changes made according to the claims of the present disclosure still fall within the scope of the present disclosure.

## Claims

1. A virus detection method, the method comprising:
computing (S101) a target hash digest of a file to be detected;
computing (S102) bit indices of the file to be detected in a preset Bloom filter based on hash functions of the preset Bloom filter and the target hash digest; wherein bit indices of each known virus file in the preset Bloom filter are determined based on a hash digest of the corresponding known virus file; and all of parameter values corresponding to the bit indices of each known virus file in the preset Bloom filter are a preset value;
determining (S103) whether the file to be detected is a virus file based on the preset Bloom filter and the bit indices corresponding to the file to be detected.

2. The method according to claim 1, wherein computing the bit indices of the file to be detected in the preset Bloom filter based on the hash functions of the preset Bloom filter and the target hash digest comprises:
computing hash values of the target hash digest respectively based on the hash functions of the preset Bloom filter;
determining the computed hash values as corresponding bit indices of the file to be detected in the preset Bloom filter.

3. The method according to claim 1, wherein determining whether the file to be detected is a virus file based on the preset Bloom filter and the bit indices corresponding to the file to be detected comprises:
querying target parameter values of the bit indices corresponding to the file to be detected in the preset Bloom filter;
in response to a determination that at least one of the target parameter values is not the preset value, determining that the file to be detected is not a virus file;
in response to a determination that all the target parameter values of the bit indices are the preset value, performing virus detection on the file to be detected based on at least one of a preset whitelist, a preset blacklist, and an external storage device to identify whether the file to be detected is a virus file;
wherein the preset whitelist stores hash digests of a plurality of non-virus files, the preset blacklist stores hash digests of a plurality of virus files, and the external storage device stores hash digests of each known virus file.

4. The method according to claim 3, wherein performing virus detection on the file to be detected based on the preset whitelist and the preset blacklist comprises:
in response to a determination that the target hash digest of the file to be detected exists in the preset whitelist, determining that the file to be detected is not a virus file; or,
in response to a determination that the target hash digest of the file to be detected does not exist in the preset whitelist but exists in the preset blacklist, determining that the file to be detected is a virus file.

5. The method according to claim 3, wherein performing virus detection on the file to be detected based on the preset whitelist, the preset blacklist, and the external storage device comprises:
in response to a determination that the target hash digest of the file to be detected does not exist in both the preset whitelist and the preset blacklist but exists in the hash digests of known virus files stored in the external storage device, determining that the file to be detected is a virus file and storing the target hash digest of the file to be detected in the preset blacklist;
in response to a determination that the target hash digest of the file to be detected does not exist in both the preset whitelist and the preset blacklist and does not exist in the hash digests of known virus files stored in the external storage device, determining that the file to be detected is not a virus file and storing the target hash digest of the file to be detected in the preset whitelist.

6. The method according to claim 5, wherein the method further comprises:
in response to a determination that the target hash digest of the file to be detected exists in the preset whitelist or the preset blacklist, obtaining a historical storage time of an existing hash digest that is identical to the target hash digest of the file to be detected;
updating the historical storage time to a current time.

7. The method according to claim 5, wherein storing the target hash digest of the file to be detected in the preset blacklist comprises:
in a case where an amount of data in the preset blacklist reaches a preset amount, obtaining a hash digest with an earliest storage time from the preset blacklist; deleting the hash digest with the earliest storage time; storing the target hash digest of the file to be detected to the preset blacklist; or in a case where the amount of data in the preset blacklist does not reach the preset amount, directly storing the target hash digest of the file to be detected to the preset blacklist;
setting a storage time of the target hash digest to a current time.

8. The method according to claim 1, wherein determining bit indices of each known virus file in the preset Bloom filter based on a hash digest of the corresponding known virus file comprises:
computing a hash digest of each known virus file according to a preset hash function;
computing hash values of the hash digest of each known virus file respectively according to the hash functions of the preset Bloom filter;
determining the computed hash values corresponding to each known virus file as corresponding bit indices of the corresponding known virus file in the preset Bloom filter;
setting parameter values corresponding to the bit indices of the respective known virus files in the preset Bloom filter to the preset value.

9. A virus detection apparatus (1), wherein the apparatus comprises:
a first computation module (10) for computing a target hash digest of a file to be detected;
a second computation module (20) for computing bit indices of the file to be detected in a preset Bloom filter based on hash functions of the preset Bloom filter and the target hash digest; wherein, bit indices of each known virus file in the preset Bloom filter are determined according to a hash digest of the corresponding known virus files; and all of parameter values corresponding to the bit indices of each known virus file in the preset Bloom filter are a preset value;
a determination module (30) for determining whether the file to be detected is a virus file based on the preset Bloom filter and the bit indices corresponding to the file to be detected.

10. A computer storage medium, wherein the computer storage medium stores a plurality of instructions, which are suitable for being loaded and executed by a processor, causing the processor to perform the method according to any one of claims 1-8.

11. An electronic device (1000), wherein the electronic device comprises: a processor (1001) and a memory; wherein, the memory stores computer programs, which are suitable for being loaded and executed by the processor, causing the processor to perform operations comprising:
computing (S101) a target hash digest of a file to be detected;
computing (S102) bit indices of the file to be detected in a preset Bloom filter based on hash functions of the preset Bloom filter and the target hash digest; wherein bit indices of each known virus file in the preset Bloom filter are determined based on a hash digest of the corresponding known virus file; and all of parameter values corresponding to the bit indices of each known virus file in the preset Bloom filter are a preset value;
determining (S103) whether the file to be detected is a virus file based on the preset Bloom filter and the bit indices corresponding to the file to be detected.

12. The electronic device according to claim 11, wherein computing the bit indices of the file to be detected in the preset Bloom filter based on the hash functions of the preset Bloom filter and the target hash digest comprises:
computing hash values of the target hash digest respectively based on the hash functions of the preset Bloom filter;
determining the computed hash values as corresponding bit indices of the file to be detected in the preset Bloom filter.

13. The electronic device according to claim 11, wherein determining whether the file to be detected is a virus file based on the preset Bloom filter and the bit indices corresponding to the file to be detected comprises:
querying target parameter values of the bit indices corresponding to the file to be detected in the preset Bloom filter;
in response to a determination that at least one of the target parameter values is not the preset value, determining that the file to be detected is not a virus file;
in response to a determination that all the target parameter values of the bit indices are the preset value, performing virus detection on the file to be detected based on at least one of a preset whitelist, a preset blacklist, and an external storage device to identify whether the file to be detected is a virus file;
wherein the preset whitelist stores hash digests of a plurality of non-virus files, the preset blacklist stores hash digests of a plurality of virus files, and the external storage device stores hash digests of each known virus file.

14. The electronic device according to claim 13, wherein performing virus detection on the file to be detected based on the preset whitelist and the preset blacklist comprises:
in response to a determination that the target hash digest of the file to be detected exists in the preset whitelist, determining that the file to be detected is not a virus file; or,
in response to a determination that the target hash digest of the file to be detected does not exist in the preset whitelist but exists in the preset blacklist, determining that the file to be detected is a virus file.

15. The electronic device according to claim 13, wherein performing virus detection on the file to be detected based on the preset whitelist, the preset blacklist, and the external storage device comprises:
in response to a determination that the target hash digest of the file to be detected does not exist in both the preset whitelist and the preset blacklist but exists in the hash digests of known virus files stored in the external storage device, determining that the file to be detected is a virus file and storing the target hash digest of the file to be detected in the preset blacklist;
in response to a determination that the target hash digest of the file to be detected does not exist in both the preset whitelist and the preset blacklist and does not exist in the hash digests of known virus files stored in the external storage device, determining that the file to be detected is not a virus file and storing the target hash digest of the file to be detected in the preset whitelist.
